# EUROPÄISCHE PATENTSCHRIFT

(11) **EP 0 438 670 B1**
(45) Veröffentlichungstag und Bekanntmachung des Hinweises auf die Patenterteilung: **24.01.1996**
(21) Anmeldenummer: 90122765.2
(22) Anmeldetag: 28.11.1990
(51) Int. Cl.: H04M 1/22

(54) **Taste mit Leuchtanzeige für Fernsprechgeräte**
Light emitting type push button for telephone sets
Bouton poussoir lumineux pour postes téléphoniques

(30) Priorität: 25.01.1990 DE 9000828 U
(43) Veröffentlichungstag der Anmeldung: 31.07.1991
(73) Patentinhaber: SIEMENS AKTIENGESELLSCHAFT, D-80333 München (DE)
(72) Erfinder: Krösen, Klaus, Dipl.-Ing., W-4294 Isselburg-Anholt (DE); Blöchl, Franz, Dipl.-Ing., W-4190 Bocholt-Lowick (DE)

(56) Entgegenhaltungen:
- EP-A- 0 342 747
- DE-A- 2 825 833
- DE-U- 8 436 320
- GB-A- 2 140 210
- US-A- 4 491 692
- US-A- 4 924 044
- PATENT ABSTRACTS OF JAPAN vol. 13, no. 429 (E-823)25. September 1989 & JP-A-1 159 917
- PATENT ABSTRACTS OF JAPAN vol. 15, no. 308 (E-1097)7. August 1991 & JP-A-3 112 020
- PATENT ABSTRACTS OF JAPAN vol. 13, no. 317 (E-789)19. Juli 1989 & JP-A- 1 086 419
- PATENT ABSTRACTS OF JAPAN vol. 13, no. 383 (E-811)24. August 1989 & JP-A- 1 134 827

## Beschreibung

Die vorliegende Erfindung beinhaltet Tasten mit Leuchtanzeige für Fernsprechgeräte, wobei der dem Benutzer zugewandte Sichtbereich der Taste mittels einer Leuchtdiode angestrahlt wird und die Taste über einen Kontakt enthaltende Hubbälge einer Gummimatte auf Kontaktteile einer Leiterplatte einwirken.

Bei heutigen Komfortfernsprechern werden neben den gewünschte Schaltzustände auslösenden Tasten Leuchtdioden angeordnet, die dem Benutzer auf bestimmte Funktionen und Schaltzustände aufmerksam machen. Ublicherweise werden die Leuchtdioden unter neben den Tasten im Fernsprechergehäuse angeordneten Blenden vorgesehen. Hierbei ist nur das direkt nach oben abgestrahlte Licht für den Benutzer sichtbar. Bei dieser Ausführungsform muß es als nachteilig erachtet werden, daß die Leuchtanzeige aufgrund des senkrecht von der Leuchtdiode abgestrahlten Lichtes oftmals vom Benutzer-nur schlecht oder kaum erkennbar ist, da dessen Blickrichtung in den meisten Fällen schräg zum Fernsprecher verläuft. Weiterhin wird die als Einzelteil gestaltete Blende mittels Ultraschall mit dem Fernsprechgerät verbunden sowie die Leuchtdiode von Hand in einer vorgegebenen Höhe eingelötet, was einen nicht unerheblichen Material- und Arbeitsaufwand erfordert.

Um die Lichtausbeute für den Benutzer zu verbesssern, ist es durch das DE-GM 76 29 120 bekannt, die dem Benutzer zugewandte Fläche der Taste abzuschrägen und die Leuchtdiode direkt unterhalb der abgeschrägten Fläche anzuordnen. Dadurch wird zwar die genannte abgeschrägte Fläche der Taste von dem aus der Leuchtdiode austretenden Lichtbündel hinreichend ausgeleuchtet, so daß der angezeigte Schaltzustand deutlich erkennbar ist, jedoch muß es auch bei dieser Ausführungsform als nachteilig angesehen werden, daß die Leuchtdiode stets exakt auf die abgeschrägte Fläche ausgerichtet und in dieser Lage elektrisch und mechanisch mit den entsprechenden Kontakten verbunden werden muß.

Weiterhin ist es durch die Veröffentlichung Patent Abstracts of Japan, Vol. 13, No. 429 (E-823) 25. September 1989 & JP-A-1 159 917 bekannt, eine Leuchtdiode direkt mit einer Leiterplatte zu kontaktieren. Dabei ist die Leuchtdiode zwischen Kontakten auf der Leiterplatte angeordnet, die mit an einer darüber vorgesehenen Taste angeordneten Gegenkontakten zusammenarbeiten. Die Leuchtdiode strahlt ihr Licht in Richtung der Tastenoberfläche ab, so daß diese gleichmäßig ausgeleuchtet ist.

Der vorliegenden Erfindung liegt nunmehr, ausgehend von Tasten der eingangs erwähnten Art, die Aufgabe zugrunde, eine Taste mit Leuchtanzeige zu schaffen, die bei geringem Raumbedarf ohne großen Arbeitsaufwand kostengünstig herstellbar ist.

Diese Aufgabe wird dadurch gelöst, daß die Leuchtdiode innerhalb einer Ausnehmung der Gummimatte mit der Leiterplatte elektrisch und mechanisch verbunden ist und der der Leuchtdiode unmittelbar zugewandte Bereich der Taste einen teilweise prismenartig gestalteten Hohlraum besitzt, über dessen Innenkonturen und den Außenkonturen der Taste das von der Leuchtdiode ausgehende Lichtbündel direkt zu einer dem Benutzer zugewandten Einwölbung der Tastenoberfläche abgelenkt wird.

Durch die Patentanmeldung EP-A-0 342 747 ist es weiterhin bekannt, Teilbereiche einzelner Tasten einer Tastatur durch speziell geformte Lichtleiter auszuleuchten.

Die der Erfindung zugrundeliegende Taste ist so gestaltet, daß aufgrund des der Leuchtdiode unmittelbar zugewandten Hohlraums und der Gestaltung der äußeren Konturen der Taste und der Tastenoberfläche das von der Leuchtdiode ausgehende Lichtbündel so gezielt und konzentriert auf die dem Benutzer zugewandte Einwölbung abgelenkt wird, daß der angezeigte Schaltzustand auch bei ungünstigen Lichtverhältnissen vom Benutzer eindeutig erkannt wird.

Dabei kann der Hohlraum der Taste einen abgerundeten Endbereich, eine in Betätigungsrichtung der Taste parallel verlaufende Innenwand und einen prismenartig gestalteten Boden aufweisen, während die Außenkonturen des Hohlraums bzw. der Taste gewölbt gestaltet sind.

Die Erfindung soll im folgenden anhand eines Ausführungsbeispiels erläutert werden.

Es zeigen in einer teilweise geschnittenen Seitenansicht
Figur 1 ausschnittsweise die Anordnung der Leuchttaste in einem Fernsprechgerät,
Figur 2 den Strahlengang innerhalb der in Figur 1 dargestellten Leuchttaste.

Bei Komfortfernsprechern sind eine Vielzahl von Tasten 1 angeordnet, die im gedrückten bzw. ungedrückten Zustand dem Benutzer durch Leuchtdioden 5 auf bestimmte Schaltzustände oder Funktionen hinweisen.

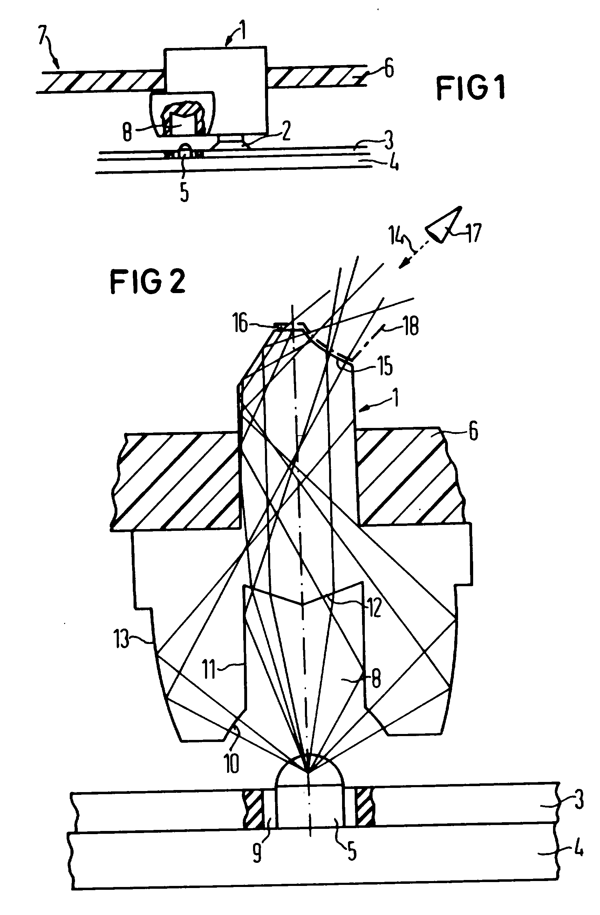

Die jeweilige Taste 1 wirkt dabei auf einen Hubbalg 2 einer Gummimatte 3 ein. Mittels eines am Hubbalg 2 vorgesehenen, hier nicht dargestellten Kontaktteils werden im niedergedrückten Zustand der Taste 1 ebenfalls nicht gezeigte Kontaktteile auf einer Leiterplatte 4 betätigt. Die Taste 1 ist, wie aus Figur 1 ersichtlich, innerhalb eines Ausschnittes in dem Gehäuseoberteil 6 des Fernsprechgerätes 7 geführt und gehaltert. Die Taste 1 besitzt ferner einen der Gummimatte 3 und der auf der Leiterplatte 4 befestigten Leuchtdiode 5 zugewandten Hohlraum 8. Die Leuchtdiode 5 ist innerhalb einer Ausnehmung 9 (Figur 2) der Gummimatte 3 angeordnet und mit der Leiterplatte 4 z. B. durch Schwallöten elektrisch und mechanisch fest verbunden.

Wie aus der Figur 2 ersehen werden kann, trifft das von der Leuchtdiode 5 abgestrahlte Lichtbündel sowohl auf den abgerundeten Endbereich 10 wie auch auf die Innenwand 11 und den prismenartig gestalteten Boden 12 des Hohlraumes 8 der vorzugsweise aus Plexiglas bestehenden unbetätigten und geschnitten dargestellten Taste 1 auf und wird aufgrund der gewölbten Konturen 13 der Taste so reflektiert, daß das Licht gezielt in Blickrichtung 14 des Benutzers 17 abgelenkt wird. Die Tastenoberfläche besitzt eine in Blickrichtung weisende Einwölbung 15. In dem strichpunktierten Oberflächenbereich 18 der Einwölbung 15 und der Tastenoberfläche 16 ist die Taste mattiert, während alle restlichen Oberflächen der Taste hochglanzpoliert sind.

## Patentansprüche

1. Tasten (1) mit Leuchtanzeige für Fernsprechgeräte (8), wobei der dem Benutzer (17) zugewandte Sichtbereich der Taste (1) mittels einer Leuchtdiode (5) angestrahlt wird, und die Tasten (1) über einen Kontakt enthaltende Hubbälge (2) einer Gummimatte (3) auf Kontaktteile einer Leiterplatte (4) einwirken, **dadurch gekennzeichnet**, daß die Leuchtdiode (5) innerhalb einer Ausnehmung (9) der Gummimatte (3) mit der Leiterplatte (4) elektrisch und mechanisch verbunden ist und der der Leuchtdiode (5) unmittelbar zugewandte Bereich der Taste einen teilweise prismenartig gestalteten Hohlraum (8) besitzt, über dessen Innenkonturen (10, 11, 12) und den Außenkonturen (13) der Taste (1) das von der Leuchtdiode (5) ausgehende Lichtbündel direkt zu einer dem Benutzer (17) zugewandten Einwölbung (15) der Tastenoberfläche (16) abgelenkt wird.

2. Taste nach Anspruch 1, **dadurch gekennzeichnet**, daß der Hohlraum (8) der Taste (1) einen abgerundeten Endbereich (10), eine in Betätigungsrichtung der Taste parallel verlaufende Innenwand (11) und einen prismenartig gestalteten Boden (12) aufweist, während die Außenkontur (13) des Hohlraums (8) bzw. der Taste (1) gewölbt gestaltet ist.

3. Taste nach Anspruch 1, **dadurch gekennzeichnet**, daß die dem Benutzer zugewandte Einwölbung (15) der Tastenoberfläche (16) sowie der senkrecht zur Betätigungsrichtung verlaufende Bereich der Tastenoberfläche (16) mattiert ist, während die restlichen Tastenoberflächen hochglanzpoliert sind.

## Claims

1. Pushbuttons (1) having an illuminated display for telephone sets (8), the viewing region of the pushbutton (1) which faces the user (17) being illuminated by a light-emitting diode (5), and the pushbuttons (1) acting via linear-movement bellows (2), which contain a contact, of a rubber mat (3) on contact parts of a printed circuit board (4), characterized in that the light-emitting diode (5) is electrically and mechanically connected within a recess (9) in the rubber mat (3) to the printed circuit board (4), and that region of the pushbutton which directly faces the light-emitting diode (5) has a cavity (8) which is partially designed in the form of a prism and via whose internal contours (10, 11, 12) and the external contours (13) of the pushbutton (1) the light beam which emerges from the light-emitting diode (5) is deflected directly to an indentation (15), which faces the user (17), in the pushbutton surface (16).

2. Pushbutton according to Claim 1, characterized in that the cavity (8) in the pushbutton (1) has a rounded end region (10), an inner wall (11) running parallel in the operating direction of the pushbutton, and a base (12) which is designed in the form of a prism, while the external contour (13) of the cavity (8) and of the pushbutton (1) is designed in a domed shape.

3. Pushbutton according to Claim 1, characterized in that the indentation (15) which faces the user, in the pushbutton surface (16) and that region of the pushbutton surface (16) which runs at right angles to the operating direction has a matt finish, while the remaining pushbutton surfaces have a high-gloss polish.

## Revendications

1. Touches (1) à voyant lumineux pour postes téléphoniques (8), la zone de visibilité de la touche (1), tournée vers l'utilisateur (17), étant éclairée au moyen d'une diode électroluminescente (5), et les touches (1) agissant sur des pièces de contact d'une plaquette à circuits imprimés (4), par l'intermédiaire de soufflets de levage (2), qui comprennent un contact, d'un tapis en caoutchouc (3), caractérisées par le fait que la diode électroluminescente (5) est reliée électriquement et mécaniquement à la plaquette à circuits imprimés (4), à l'intérieur d'un évidement (9) du tapis en caoutchouc (3) et la zone de la touche, qui est tournée directement vers la diode électroluminescente (5), comporte une cavité (8) de forme partiellement prismatique, et le faisceau de lumière, qui sort de la diode électroluminescente (5), est dévié directement, par l'intermédiaire des contours intérieurs (10, 11,12) de la cavité et des contours extérieurs (13) de la touche (1), en direction d'une partie concave (15), tournée vers l'utilisateur (17), de la surface (16) de la touche.

2. Touche suivant la revendication 1, caractérisée par le fait que la cavité (8) de la touche (1) a une zone d'extrémité arrondie (10), une paroi intérieure (11) qui est parallèle à la direction d'actionnement de la touche, et un fond (12) de forme prismatique, tandis que le contour extérieur (13) de la cavité (8) ou de la touche (1) a une forme bombée.

3. Touche suivant la revendication 1, caractérisée par le fait que la partie concave (15), tournée vers l'utilisateur, de la surface (16) de la touche ainsi que la partie, qui s'étend perpendiculairement à la direction d'actionnement, de la surface (16) de la touche est rendue mate, tandis que les autres surfaces de la touche sont polies de manière à présenter un brillant spéculaire.
